# EUROPÄISCHE PATENTSCHRIFT

(11) **EP 1 089 582 B1**
(45) Veröffentlichungstag und Bekanntmachung des Hinweises auf die Patenterteilung: **30.03.2005**
(21) Anmeldenummer: 00250318.3
(22) Anmeldetag: 26.09.2000
(51) Int. Cl.: H04Q 7/38

(54) **Anordnung mit einer Telekommunikationsanlage und Verfahren zu deren Betrieb**
Installation with a telecommunication device and method for its use
Installation avec un appareil de télécommunication et procédé de son opération

(30) Priorität: 30.09.1999 DE 19948698
(43) Veröffentlichungstag der Anmeldung: 04.04.2001
(73) Patentinhaber: SIEMENS AKTIENGESELLSCHAFT, 80333 München (DE)
(72) Erfinder: Antonov, Iavor, Dr., 10117 Berlin (DE); Koenemann, Dirk, 24161 Altenholz (DE); Dummann, Uwe, 16341 Zepernick (DE)

(56) Entgegenhaltungen:
- EP-A- 0 758 187
- EP-A- 0 941 001

## Beschreibung

Die Erfindung bezieht sich auf eine Anordnung mit einer Telekommunikationsanlage, die einerseits an ein Telekommunikationsnetz angeschlossen ist und andererseits über eine Schnittstelle mit Telekommunikationsendgeräten in Verbindung steht. Unter dem Begriff Telekommunikationsanlage ist beispielsweise eine sog. Nebenstellenanlage zu verstehen.

Eine derartige Anordnung ist aus dem Prospekt Der Business-Katalog" (Deutsche Telekom Frühjahr/Sommer 1999, Seite 43) bekannt. Bei dieser Anordnung ist die Telekommunikationsanlage - Produktname ISDN-Telefonanlage T-Concept XI320 - einerseits an einen NT-Anschluß (Network Termination) eines ISDN-Telekommunikationsnetzes und andererseits an eine Vielzahl von Telekommunikationsendgeräten angeschlossen. Der Anschluß der Telekommunikationsendgeräte an die Telekommunikationsanlage erfolgt dabei entweder über IAE-Steckplätze einer internen digitalen ISDN-Schnittstelle (ISDN-intern" genannt) oder über TAE-Steckplätze einer analogen Schnittstelle.

Darüber hinaus sind sog. schnurlose (englisch: cordless) Telefone bekannt (z. B. Siemens GIGASET-Telefone, Prospekt Die Freiheit, die uns verbindet. Gigaset 2000", Bestellnr. A31001-W20-A64/V3); schnurlose Telefone bestehen aus zwei Komponenten, nämlich aus einer Mobilfunk-Basisstation, die an das Telekommunikationsnetz oder an eine Telekommunikationsanlage angeschlossen wird, und aus einem oder mehreren mobilen Endgeräten - auch Mobilteile genannt - , die mit der Mobilfunk-Basisstation über Funk, beispielsweise im DECT-Standard, kommunizieren. Um sicherzustellen, daß die Mobilfunk-Basisstation des schnurlosen Telefons ausschließlich mit solchen Mobilteilen kommuniziert, die vom Telefon-Eigentümer bzw. vom Telefon-Nutzer des schnurlosen Telefons zugelassen und angemeldet worden sind, sind in einem Speicher der Mobilfunk-Basisstation die Zugangsberechtigungen aller zuvor zugelassenen Mobilteile abgespeichert.

Weiterhin sind Systeme mit einer LAN Schnittstelle zur direkten Verbindung von Basisstationen in Telekommunikationsanlagen aus der Druckschrift EP 07 58 187 A1 bekannt.

Der Erfindung liegt die Aufgabe zugrunde, eine Anordnung der eingangs beschriebenen Art dahingehend fortzuentwickeln, daß bei Anschluß mehrerer Mobilfunk-Basisstationen an eine Telekommunikationsanlage für jedes mit der Telekommunikationsanlage in Verbindung stehende Mobilteil ein insgesamt größerer Sende-/Empfangsbereich gebildet wird als dies bisher der Fall ist.

Diese Aufgabe wird bei einer Anordnung der eingangs beschriebenen Art erfindungsgemäß dadurch gelöst, daß mindestens zwei der Telekommunikationsendgeräte ortsfeste Mobilfunk-Basisstationen sind, die zur Sprach- und/oder Datenübertragung mit allen denjenigen Mobilfunk-Endgeräten - nachfolgend Mobilteile genannt - bereit sind, deren Zugangsberechtigung geprüft und als richtig erkannt ist, wobei jede der Mobilfunk-Basisstationen zum Prüfen der Zugangsberechtigung eine einen Speicher enthaltende Steuereinrichtung aufweist, die unter Benutzung der Daten- und/oder Signalleitungen der Schnittstelle der Telekommunikationsanlage die in ihrem jeweiligen Speicher abgespeicherten Zugangsberechtigungs-Datensignale den Steuereinrichtungen der übrigen Mobilfunk-Basisstationen zum Auswerten zur Verfügung stellt und auf Zugangsberechtigungs-Datensignale der übrigen Mobilfunk-Basisstationen zugreift und die die Sprach- und/oder Datenübertragung der eigenen Mobilfunk-Basisstation jeweils mit jedem Mobilteil zuläßt, dessen Kennung als Zugangsberechtigungs-Datensignal in dem eigenen Speicher oder in mindestens einem der Speicher der übrigen Mobilfunk-Basisstationen hinterlegt ist. Unter dem Begriff Mobilfunk-Endgerät" bzw. Mobilteil werden dabei alle Arten von mobilen Endgeräten verstanden, die mit einer entsprechenden Sende-/Empfangseinrichtung zum Anschluß an eine Mobilfunk-Basisstation ausgestattet sind; beispielsweise also mobile Funktelefone, Fax-Geräte oder auch DV-Geräte wie Laptops oder Notebooks bzw. Komponenten für solche DV-Geräte wie Drucker, Scanner etc., sofern diese - wie bereits erläutert - eine entsprechende Sende-/Empfangseinrichtung zur Kommunikation mit einer Mobilfunk-Basisstation aufweisen.

Ein wesentlicher Vorteil der erfindungsgemäßen Anordnung besteht darin, daß bei einem Anschluß mehrerer Mobilfunk-Basisstationen (beispielsweise schnurloser Telefone) an die Telekommunikationsanlage für jedes Mobilteil ein insgesamt sehr großer Sende- und Empfangsbereich gebildet wird; denn jedes Mobilteil ist in jedem der Einzelsende-/Empfangsbereiche der einzelnen Mobilfunk-Basisstationen sende- und empfangsberechtigt; dies ist bei der erfindungsgemäßen Anordnung konkret darauf zurückzuführen, daß ein Austausch der Zugangsberechtigungsdaten zwischen den einzelnen Mobilfunk-Basisstationen durchgeführt wird. Aufgrund dieses Austausches der Zugangsberechtigungsdaten wird also eine "Hand-over"- bzw. "Roaming"-Funktion möglich gemacht; unter dem Begriff Hand-over- bzw. Roaming-Funktion wird dabei verstanden, daß ein bei einer der Mobilfunk-Basisstationen angemeldetes bzw. zugangsberechtigtes Mobilteil automatisch auch bei allen übrigen an die Telekommunikationsanlage angeschlossenen Mobilfunk-Basisstationen zugangsberechtigt ist, sobald es den Sende-/Empfangsbereich seiner jeweils zugewiesenen Mobilfunk-Basisstation verläßt und in den Sende/Empfangsbereich einer anderen Mobilfunk-Basisstation gelangt. Der Austausch der Zugangsberechtigungsdaten für die Hand-over bzw. Roaming-Funktion wird bei der erfindungsgemäßen Anordnung konkret dadurch erreicht, daß jede Mobilfunk-Basisstation zum Prüfen der Zugangsberechtigung eine Steuereinrichtung aufweist, die die Sprach- und/oder Datenübertragung mit jedem Mobilteil zuläßt, dessen Kennung als Zugangsberechtigungs-Datensignal in dem eigenen Speicher oder in mindestens einem der Speicher der übrigen Mobilfunk-Basisstationen hinterlegt ist; der Zugriff auf die Zugangsberechtigungs-Datensignale der übrigen Mobilfunk-Basisstationen erfolgt dabei unter Benutzung der Daten und/oder Signalleitungen der Schnittstelle der Telekommunikationsanlage. Ein weiterer wesentlicher Vorteil der erfindungsgemäßen Anordnung ist darin zu sehen, daß der Austausch der Zugangsberechtigungsdaten für die Roaming- bzw. Hand-over-Funktion realisiert wird, ohne daß hierfür eine zusätzliche, den Mobilfunk-Basisstationen übergeordnete Zentraleinheit erforderlich wäre, die die Zugangsberechtigungen aller angemeldeten zugelassenen Mobilteile im Rahmen einer zentralen Datenbank" verwaltet; denn bei der erfindungsgemäßen Anordnung stellen sich die Mobilfunk-Basisstationen die in ihrem jeweiligen Speicher abgespeicherten Zugangsberechtigungs-Datensignale unter Benutzung der Daten- und/oder Signalleitungen der Schnittstelle der Telekommunikationsanlage direkt und unmittelbar zur Verfügung, so daß jede der Mobilfunk-Basisstationen durch entsprechende Anfragen an die übrigen Mobilfunk-Basisstationen auf alle abgespeicherten Zugangsberechtigungen zurückgreifen kann. Bei der erfindungsgemäßen Anordnung wird also die Funktion der zentralen Datenbank" realisiert durch den Datenaustausch zwischen den Speichern der an die Telekommunikationsanlage angeschlossenen Mobilfunk-Basisstationen. Ein zusätzlicher wesentlicher Vorteil der erfindungsgemäßen Anordnung besteht darin, daß bereits bestehende Telefon- bzw. Nebensprechanlagen um die Funktion des Austauschs der Zugangsberechtigungsdaten" erweitert werden können, ohne daß sie selbst einer Veränderung bzw. Modifikation unterworfen werden müßten; denn die Funktionalitätserweiterung wird ausschließlich durch die entsprechende Ausgestaltung der an die vorhandene Telefonanlage anzuschließenden Mobilfunk-Basisstationen erreicht.

Um sicherzustellen, daß jede Mobilfunk-Basisstation möglichst schnell prüfen kann, ob ein Mobilteil eine zugelassene Kennung aufweist, wird es als vorteilhaft angesehen, wenn die Steuereinrichtungen der Mobilfunk-Basisstationen derart ausgestaltet sind, daß sie die Zugangsberechtigungs-Datensignale über die Daten-und/oder Signalleitungen der Schnittstelle untereinander austauschen unter Bildung eines einheitlichen Zugangsberechtigungs-Datensatzes in jeder der Mobilfunk-Basisstationen; denn gemäß dieser Weiterbildung der erfindungsgemäßen Anordnung verfügt jede Mobilfunk-Basisstation nach erfolgtem Austausch der Zugangsberechtigungs-Datensignale über einen kompletten Zugangsberechtigungs-Datensatz, so daß sie - ohne die übrigen Mobilfunk-Basisstationen befragen zu müssen - darüber entscheiden kann, ob die Kennung des jeweiligen Mobilteils zu akzeptieren ist bzw. ob die Sprach- und/oder Datenübertragung stattfinden kann.

Bezüglich der Bildung des einheitlichen Zugangsberechtigungs-Datensatzes in jeder der Mobilfunk-Basisstationen wird es darüber hinaus als vorteilhaft angesehen, wenn die Steuereinrichtungen der Mobilfunk-Basisstationen derart ausgestaltet sind, daß sie die Zugangsberechtigungs-Datensignale in regelmäßigen zeitlichen Abständen austauschen. Unterschiede in den einzelnen Zugangsberechtigungs-Datensätzen können nämlich so einfach erkannt und eliminiert werden.

Gemäß einer anderen Variante der erfindungsgemäßen Anordnung wird es als vorteilhaft angesehen, wenn die Steuereinrichtungen der Mobilfunk-Basisstationen derart ausgestaltet sind, daß sie nach einem ersten erfolgten Datenaustausch weitere Zugangsberechtigungs-Datensignale ausschließlich dann austauschen, wenn eine Veränderung der Zugangsberechtigung aufgetreten ist. Bei dieser Variante werden also nach dem ersten Datenaustausch ausschließlich Veränderungen des Zugangsberechtigungs-Datensatzes übermittelt, wodurch erreicht wird, daß die Daten- und/oder Signalleitungen der Schnittstelle nur in Anspruch genommen werden, wenn dies auch tatsächlich erforderlich ist.

Als vorteilhaft wird es darüber hinaus angesehen, wenn die Steuereinrichtungen der Mobilfunk-Basisstationen derart ausgestaltet sind, daß sie die in ihrem jeweiligen Speicher hinterlegten Zugangsberechtigungs-Datensignale ausschließlich auf Anfrage anderer Mobilfunk-Basisstationen an diese weiterleiten; diese Anordnung läßt sich besonders vorteilhaft dann einsetzen, wenn die Hand-over- bzw. Roaming-Funktion sehr selten genutzt wird und ein ständiges Parathalten" des gesamten aktuellen Zugangsberechtigungs-Datensatzes nicht erforderlich ist. Ein weiterer Vorteil dieser Weiterbildung ist darin zu sehen, daß der Speicherplatz des Speichers der Steuereinrichtungen sehr klein sein kann, da ausschließlich die Zugangsberechtigungen der jeweils eigenen" Mobilteile gespeichert werden müssen, also nicht die Zugangsberechtigungen aller zugelassenen Mobilteile.

Die Erfindung bezieht sich außerdem auf eine Mobilfunk-Basisstation zum Anschluß an eine Schnittstelle einer Telekommunikationsanlage mit:
- mindestens einer Funkeinrichtung zur Sprach- und/oder Datenübertragung und
- mindestens einer die Funkeinrichtung ansteuernden und einen Speicher aufweisenden Steuereinrichtung, die die Sprach- und/oder Datenübertragung mit allen denjenigen Mobilteilen zuläßt, die eine in dem Speicher der Steuereinrichtung abgespeicherte Kennung aufweisen.

Eine derartige Mobilfunk-Basisstation ist aus dem oben genannten Prospekt zum Siemens-GIGASET-Telefon bekannt.

Bezüglich einer solchen Mobilfunk-Basisstation liegt der Erfindung die Aufgabe zugrunde, eine Mobilfunk-Basisstation anzugeben, mit der sich erreichen läßt, daß bei Anschluß mehrerer Mobilfunk-Basisstationen an eine Telekommunikationsanlage für jedes mit der Telekommunikationsanlage in Verbindung stehende Mobilteil ein insgesamt größerer Sende-/Empfangsbereich gebildet wird als dies bisher der Fall ist.

Diese Aufgabe wird bei einer Mobilfunk-Basisstation der angegebenen Art erfindungsgemäß dadurch gelöst, daß die Steuereinrichtung derart beschaffen ist, daß sie unter Benutzung der Daten- und/oder Signalleitungen der Schnittstelle der Telekommunikationsanlage einerseits die in ihrem Speicher abgespeicherten Zugangsberechtigungs-Datensignale anderen an die Schnittstelle angeschlossenen Mobilfunk-Basisstationen zur Verfügung stellt und andererseits auf Zugangsberechtigungs-Datensignale der anderen Mobilfunk-Basisstationen zugreift und die Sprach- und/oder Datenübertragung jeweils zusätzlich auch mit jedem anderen Mobilteil zuläßt, dessen Zugangsberechtigung in mindestens einem Speicher der anderen Mobilfunk-Basisstationen abgespeichert ist.

Die Vorteile dieser erfindungsgemäßen Mobilfunk-Basisstation entsprechen denen der erfindungsgemäßen Anordnung, so daß diesbezüglich auf die obigen Ausführungen verwiesen wird. Das gleiche gilt für die Weiterbildungen der erfindungsgemäßen Mobilfunk-Basisstation (vgl. Ansprüche 7 bis 10), die in Unteransprüchen beschrieben sind.

Als erfinderisch wird ebenfalls ein Verfahren angesehen zum Betrieb einer Anordnung mit einer Telekommunikationsanlage, die einerseits an ein Telekommunikationsnetz angeschlossen ist und andererseits über eine Schnittstelle mit mindestens zwei ortsfesten, jeweils eine Steuereinrichtung aufweisenden Mobilfunk-Basisstationen in Verbindung steht, wobei bei dem Verfahren jede Mobilfunk-Basisstation derart betrieben wird, daß sie unter Benutzung der Daten- und/oder Signalleitungen der Schnittstelle der Telekommunikationsanlage die in ihrem jeweiligen Speicher abgespeicherten Zugangsberechtigungs-Datensignale den Steuereinrichtungen der übrigen Mobilfunk-Basisstationen zum Auswerten zur Verfügung stellt und auf Zugangsberechtigungs-Datensignale der übrigen Mobilfunk-Basisstationen zugreift und daß sie die Sprach- und/oder Datenübertragung der eigenen Mobilfunk-Basisstation jeweils mit jedem Mobilteil zuläßt, dessen Zugangsberechtigung in dem eigenen Speicher oder in mindestens einem der Speicher der übrigen Mobilfunk-Basisstationen hinterlegt ist. Dieses Verfahren löst die bereits erwähnte Aufgabe, die darin besteht, daß bei Anschluß mehrerer Mobilfunk-Basisstationen an eine Telekommunikationsanlage für jedes mit der Telekommunikationsanlage in Verbindung stehende Mobilteil ein insgesamt größerer Sende-/Empfangsbereich gebildet wird als dies bisher der Fall ist.

Vorteile dieses Verfahrens sowie die Vorteile von Weiterbildungen dieses Verfahrens (vgl. Ansprüche 11 bis 15) lassen sich den obigen Ausführungen entnehmen.

Zur Erläuterung der Erfindung zeigt eine Figur ein Ausführungsbeispiel für eine erfindungsgemäße Anordnung; die Anordnung gemäß der Figur beinhaltet ebenfalls ein Ausführungsbeispiel für eine erfindungsgemäße Mobilfunk-Basisstation. Die Anordnung gemäß der Figur ist darüber hinaus zur Durchführung des erfindungsgemäßen Verfahrens geeignet.

Die Figur zeigt eine Telekommunikationsanlage 5 in Form einer Nebensprechanlage, die mit einem Anschluß A5a an ein Telekommunikationsnetz 10, und zwar an ein ISDN-Netz, angeschlossen ist; hierzu ist die Telekommunikationsanlage 5 mit ihrem Anschluß A5a mit einen sog. NT-Abschluß 15 des ISDN-Netzes 10 verbunden. Die Telekommunikationsanlage 5 weist einen weiteren Anschluß A5b auf, der eine interne ISDN-Schnittstelle 20 bildet. An die interne ISDN-Schnittstelle 20 und damit an die Telekommunikationsanlage 5 sind zwei schnurlose Telefone 25 und 30 angeschlossen; konkret ist das eine schnurlose Telefon 25 an einen IAE-Steckplatz 35 der internen ISDN-Schnittstelle 20 und das weitere schnurlose Telefon 30 an einen weiteren IAE-Steckplatz 40 der internen ISDN-Schnittstelle 20 angeschlossen. Die Telekommunikationsanlage 5 weist darüber hinaus zusätzliche Anschlüsse A5c und A5d auf, die jeweils eine analoge Schnittstelle 45 bzw. 50 bilden. Über TAE-Steckplätze 60 der beiden analogen Schnittstellen 45 und 50 können analoge Telefon-Endgeräte 65 bzw. 70 an die Telekommunikationsanlage 5 angeschlossen werden. Die Telekommunikationsanlage 5 ist mit einem schematisch dargestellten Netzstecker 75 versehen, mit dem sie an ein nicht dargestelltes Energieversorgungsnetz angeschlossen werden kann.

Das eine schnurlose Telefon 25 weist eine Mobilfunk-Basisstation 100 auf, die an den einen IAE-Steckplatz 35 der internen ISDN-Schnittstelle 20 angeschlossen ist. Die Mobilfunk-Basisstation 100 enthält eine an die Schnittstelle 20 angeschlossene Steuereinrichtung 110 mit einem Mikroprozessor 115 und einem damit verbundenen Speicher 120. Der Steuereinrichtung 110 ist eine Funkeinrichtung 135 zur Sprach- und/oder Datenübertragung mit Mobilteilen nachgeordnet; diese Funkeinrichtung 135 wird von der Steuereinrichtung 110 angesteuert. Mit der Funkeinrichtung 135 und damit mit der Mobilfunk-Basisstation 100 steht über Funk ein mobiles Telefon-Endgerät als Mobilteil 140 in Verbindung, das im Rahmen einer später erläuterten Anmeldeprozedur angemeldet worden ist; diese Funkverbindung ist in der Figur schematisch durch einen Pfeil 150 dargestellt. Bei der Funkverbindung kann es sich um eine Funkverbindung nach dem DECT-Standard, dem Bluetooth-Standard oder einem anderen geeigneten Standard handeln. Das schnurlose Telefon 25 wird also durch zwei Komponenten gebildet, nämlich der Mobilfunk-Basisstation 110 und dem Mobilteil 140.

Das weitere schnurlose Telefon 30 kann beispielsweise mit dem einen schnurlosen Telefon 25 identisch sein; dies bedeutet konkret, daß auch das weitere schnurlose Telefon 30 eine Mobilfunk-Basisstation aufweist- diese wird nachfolgend weitere Mobilfunk-Basisstation 100' genannt. Diese weitere Mobilfunk-Basisstation 100' ist an den weiteren IAE-Steckplatz 40 der internen ISDN-Schnittstelle 20 angeschlossen. Die weitere Mobilfunk-Basisstation 100' enthält eine an die Schnittstelle 20 angeschlossene, weitere Steuereinrichtung 110' mit einem weiteren Mikroprozessor 115' und einem weiteren Speicher 120'. Der weiteren Steuereinrichtung 110' ist eine weitere Funkeinrichtung 135' zur Sprach- und/oder Datenübertragung mit Mobilteilen nachgeordnet; diese weitere Funkeinrichtung 135' wird von der weiteren Steuereinrichtung 110' angesteuert. Mit der weiteren Mobilfunk-Basisstation 100' steht über Funk ein weiteres mobiles Endgerät als weiteres Mobilteil 140' in Verbindung, das im Rahmen einer vorab durchgeführten Anmeldeprozedur an die weitere Mobilfunk-Basisstation 100' angemeldet worden ist; diese Funkverbindung ist in der Figur schematisch durch einen Pfeil 150' dargestellt. Bei der Funkverbindung kann es sich ebenfalls um eine Funkverbindung nach dem DECT-Standard, dem Bluetooth-Standard oder einem anderen geeigneten Standard handeln. Das weitere schnurlose Telefon 30 wird also ebenfalls durch zwei Komponenten gebildet, nämlich der weiteren Mobilfunk-Basisstation 110' und dem weiteren Mobilteil 140'.

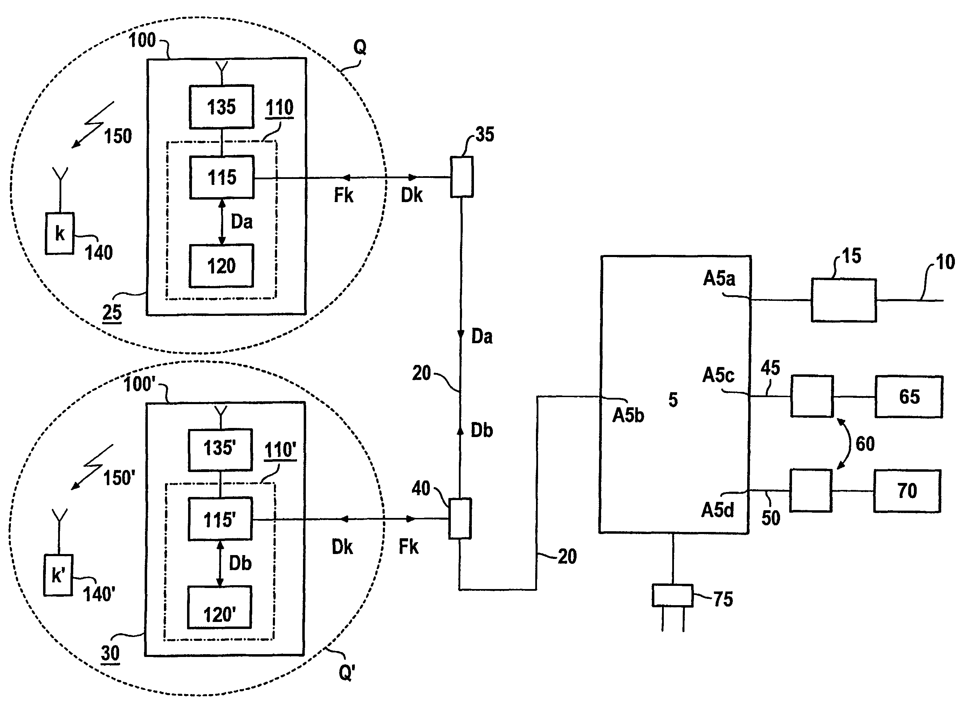

Die Anordnung gemäß Figur 1 läßt sich wie folgt betreiben:

"Normalbetrieb":
Unter dem Normalbetrieb" wird nachfolgend verstanden, daß jedes Mobilteil 140, 140' ausschließlich mit seiner zugeordneten Mobilfunk-Basisstation 100 bzw. 100' kommuniziert, also jeweils mit der Mobilfunk-Basisstation, an der es angemeldet ist. Wie sich eine solche Anmeldung von Mobilteilen an eine Mobilfunk-Basisstation bei im DECT-Standard arbeitenden schnurlosen Telefonen durchführen läßt, kann man beispielsweise dem Bedienungshandbuch zu dem eingangs genannten GIGASET-Telefon entnehmen. In dem Ausführungsbeispiel gemäß der Figur wird - wie bereits angesprochen - davon ausgegangen, daß das eine Mobilteil 140 bei der Mobilfunk-Basisstation 100 des einen schnurlosen Telefons 25 und das weitere Mobilteil 140' bei der Mobilfunk-Basisstation 100' des weiteren schnurlosen Telefons 30 angemeldet ist. Im Rahmen der jeweiligen Anmeldeprozedur werden von der Steuereinrichtung 110 bzw. 110' Zugangsberechtigungs-Datensignale Da bzw. Db erzeugt und in dem jeweiligen Speicher 120 bzw. 120 abgespeichert; diese Zugangsberechtigungs-Datensignale Da bzw. Db enthalten jeweils die Kennung K bzw. K' des zugelassenen bzw. angemeldeten Mobilteils 140 bzw. 140'. Bezogen auf die Figur heißt das, daß das Zugangsberechtigungs-Datensignal Da die Zugangsberechtigung für das Mobilteil 140 mit der Kennung K und das Zugangsberechtigungs-Datensignal Db die Zugangsberechtigung für das weitere Mobilteil 140' mit der Kennung K' enthält bzw. angibt.

Im folgenden soll nun beschrieben werden, was passiert, wenn beispielsweise das weitere Mobilteil 140' seinen in der Figur als Q' gekennzeichneten Sende-/Empfangsbereich bzw. den des weiteren schnurlosen Telefons 30 verläßt und in den mit dem Bezugszeichen Q gekennzeichneten Sende-/Empfangsbereich der Mobilfunk-Basisstation 100 des einen schnurlosen Telefons 25 eindringt.

Im Normalbetrieb - wie er oben beschrieben ist - ist keine Sprach- und/oder Datenübertragung zwischen dem weiteren Mobilteil 140' und der einen Mobilfunk-Basisstation 100 des einen schnurlosen Telefons 25 möglich, und zwar deshalb nicht, weil die Zugangsberechtigung bzw. die Kennung K' des weiteren Mobilteils 140' nicht in dem Speicher 120 der einen Mobilfunk-Basisstation 100 hinterlegt ist. Im Normalbetrieb wird also die Mobilfunk-Basisstation 100 die Kommunikation bzw. die Sprach- und/oder Datenübertragung mit dem weiteren Mobilteil 140' abbrechen bzw. gar nicht erst zulassen. Um dies aber zu vermeiden, sind die Steuereinrichtungen 110 und 110' derart ausgestaltet, daß ein Austausch der Zugangsberechtigungsdaten für eine Roaming- bzw. Hand-over-Funktion durchgeführt wird. Dies soll nachfolgend beschrieben werden.

Austausch der Zugangsberechtigungsdaten für eine Hand-over"- bzw. Roaming-Funktion:
Um zu erreichen, daß das weitere Mobilteil 140' auch im Sendebereich Q des einen schnurlosen Telefons 25 weiter betrieben werden kann, tauschen die beiden Steuereinrichtungen 110 und 110' ihre jeweils abgespeicherten Zugangsberechtigungs-Datensignale Da und Db untereinander aus. Dies ist in der Figur durch Angabe der Bezugszeichen Da und Db gekennzeichnet; dabei bezeichnet das Bezugszeichen Da die Zugangsberechtigungs-Datensignale der einen Mobilfunk-Basisstation 100 und das Bezugszeichen Db die Zugangsberechtigungs-Datensignale der weiteren Mobilfunk-Basisstation 100'. Der Austausch dieser Zugangsberechtigungs-Datensignale Da und Db kann auf verschiedene Weise erfolgen; so ist es beispielsweise denkbar, daß der Austausch der Datensignale Da und Db in zeitlich regelmäßigen Abständen erfolgt, so daß - von Datensatzveränderungen zwischen zwei Übertragungszyklen abgesehen - quasi ein einheitlicher Zugangsberechtigungs-Datensatz in jeder der beiden Mobilfunk-Basisstationen 100 und 100' vorhanden ist. Statt dessen kann der Datenaustausch auch anders erfolgen, und zwar derart, daß nach einem ersten erfolgten Datenaustausch weitere Zugangsberechtigungs-Datensignale ausschließlich dann ausgetauscht werden, wenn eine Veränderung der Zugangsberechtigung bzw. eine Veränderung der in einem der beiden Speicher 120 bzw. 120' abgespeicherten Zugangsberechtigungs-Datensignale aufgetreten ist.

Wird ein einheitlicher Zugangsberechtigungs-Datensatz in jeder der beiden Mobilfunk-Basisstationen 100 und 100' nicht als erforderlich angesehen, so ist es ebenfalls möglich, daß der Datenaustausch nur auf Anfrage einer der Mobilfunk-Basisstationen vonstatten geht; gelangt beispielsweise das weitere Mobilteil 140' in den Sendebereich Q des einen schnurlosen Telefons 25, so wird die Steuereinrichtung 110 der einen Mobilfunk-Basisstation 100 feststellen, daß das weitere Mobilteil 140' keine Zugangsberechtigung aufweist, nämlich deshalb, weil kein der Kennung K' des weiteren Mobilteils 140' entsprechendes Zugangsberechtigungs-Datensignal Db in dem einen Speicher 120 der einen Mobilfunk-Basisstation 100 abgespeichert ist. In einem solchen Fall erzeugt die eine Mobilfunk-Basisstation 100 ein Anfragesignal Dk und übermittelt dieses über die interne ISDN-Schnittstelle 20 an die weitere Mobilfunk-Basisstation 100' des weiteren schnurlosen Telefons 30. Dieses Anfragesignal Dk enthält die Kennung K' des weiteren Mobilteils 140' beispielsweise in verschlüsselter Form und einen vorgegebenen Befehls-Kode; dieser Befehls-Kode signalisiert der weiteren Mobilfunk-Basisstation 100', daß sie prüfen soll, ob das weitere Mobilteil 140' mit der Kennung K' bei ihr zugelassen ist. Gelangt dieses Anfragesignal Dk mit der Kennung K' zur weiteren Steuereinrichtung 110' der weiteren Mobilfunk-Basisstation 100', so prüft diese also, ob zu der Kennung K' eine entsprechende Zugangsberechtigung bzw. ein entsprechendes Zugangsberechtigungs-Datensignal in ihrem weiteren Speicher 120' abgespeichert ist. Ist dies der Fall, so wird die weitere Steuereinrichtung 100' der weiteren Mobilfunk-Basisstation 100' ein entsprechendes Bestätigungssignal FK erzeugen, das bestätigt, daß für die Kennung K' eine Zugangsberechtigung vorliegt; dieses Bestätigungssignal wird zu der einen Mobilfunk-Basisstation 100 übertragen. Andernfalls, falls also kein entsprechendes Zugangsberechtigungs-Datensignal abgespeichert sein sollte, wird statt des Bestätigungssignals Fk ein Sperrsignal erzeugt und an die eine Mobilfunk-Basisstation 100 übermittelt; dieses Sperrsignal gibt dann an, daß keine Zugangsberechtigung in dem weiteren Speicher 120' vorliegt.

Nachdem die eine Steuereinrichtung 110 der einen Mobilfunk-Basisstation 100 das Freigabesignal FK empfangen hat, speichert es eine die entsprechende Kennung K' des Mobilteils 140' angebende Zugangsberechtigung in Form eines Zugangsberechtigungs-Datenelements Db' in ihrem Speicher 120 ab und erlaubt anschließend die Kommunikation bzw. die Sprachund/oder Datenübertragung zwischen der einen Mobilfunk-Basisstation 100 und dem weiteren Mobilteil 140'.

Zur Durchführung des Austauschs der für die Hand-over- bzw. Roaming-Funktion erforderlichen Zugangsberechtigungsdaten müssen die beiden Steuereinrichtungen 110 und 110' also entsprechend ausgestaltet sein; dies läßt sich bei dem Ausführungsbeispiel gemäß der Figur in einfacher Weise durch eine entsprechende Programmierung der beiden Mikroprozessoren 115 und 115' erreichen.

## Patentansprüche

1. Anordnung mit einer Telekommunikationsanlage (5), die
- einerseits an ein Telekommunikationsnetz (10) angeschlossen ist und
- andererseits über eine Schnittstelle (20) mit Telekommunikationsendgeräten (25, 30) in Verbindung steht,
wobei
- mindestens zwei der Telekommunikationsendgeräte (25, 30) ortsfeste Mobilfunk-Basisstationen (100, 100') sind, die zur Sprach- und/oder Datenübertragung mit allen denjenigen Mobilfunk-Endgeräten (140, 140') - nachfolgend Mobilteile genannt - bereit sind, deren Zugangsberechtigung geprüft und als richtig erkannt ist, **dadurch gekennzeichnet, daß**
- jede der Mobilfunk-Basisstationen (100, 100') zum Prüfen der Zugangsberechtigung eine einen Speicher (120, 120') enthaltende Steuereinrichtung (110, 110') aufweist,
- die unter Benutzung der Daten- und/oder Signalleitungen der Schnittstelle (20) der Telekommunikationsanlage (5) die in ihrem jeweiligen Speicher (120, 120') abgespeicherten Zugangsberechtigungs-Datensignale (Da, Db) den Steuereinrichtungen (110, 110') der übrigen Mobilfunk-Basisstationen (100, 100') zum Auswerten zur Verfügung stellt und auf Zugangsberechtigungs-Datensignale (Da, Db) der übrigen Mobilfunk-Basisstationen (100, 100') zugreift und
- die die Sprach- und/oder Datenübertragung der eigenen Mobilfunk-Basisstation (100, 100') jeweils mit jedem Mobilteil (140,140') zuläßt, dessen Kennung (K) als Zugangsberechtigungs-Datensignal (Da, Db) in dem eigenen Speicher (120, 120') oder in mindestens einem der Speicher der übrigen Mobilfunk-Basisstationen hinterlegt ist.

2. Anordnung nach Anspruch 1,
**dadurch gekennzeichnet, daß**
- die Steuereinrichtungen (110, 110') der Mobilfunk-Basisstationen derart ausgestaltet sind, daß sie die Zugangsberechtigungs-Datensignale über die Daten-und/oder Signalleitungen der Schnittstelle (20) untereinander austauschen unter Bildung eines einheitlichen Zugangsberechtigungs-Datensatzes in jeder der Mobilfunk-Basisstationen.

3. Anordnung nach Anspruch 2,
**dadurch gekennzeichnet, daß**
- die Steuereinrichtungen (110, 110') der Mobilfunk-Basisstationen derart ausgestaltet sind, daß sie die Zugangsberechtigungs-Datensignale in regelmäßigen zeitlichen Abständen austauschen.

4. Anordnung nach Anspruch 2,
**dadurch gekennzeichnet, daß**
- die Steuereinrichtungen (110, 110') der Mobilfunk-Basisstationen derart ausgestaltet sind, daß sie nach einem ersten erfolgten Datenaustausch weitere Zugangsberechtigungs-Datensignale ausschließlich dann austauschen, wenn eine Veränderung der Zugangsberechtigung aufgetreten ist.

5. Anordnung nach Anspruch 1,
**dadurch gekennzeichnet, daß**
- die Steuereinrichtungen (110, 110') der Mobilfunk-Basisstationen derart ausgestaltet sind, daß sie die in ihrem jeweiligen Speicher hinterlegten Zugangsberechtigungs-Datensignale jeweils ausschließlich auf Anfrage anderer Mobilfunk-Basisstationen an diese weiterleiten.

6. Mobilfunk-Basisstation (110, 110') zum Anschluß an eine Schnittstelle (20) einer Telekommunikationsanlage (5) mit:
- mindestens einer Funkeinrichtung (135, 135') zur Sprachund/oder Datenübertragung und
- mindestens einer die Funkeinrichtung (135, 135') ansteuernden und einen Speicher (120, 120') aufweisenden Steuereinrichtung, die die Sprach- und/oder Datenübertragung mit allen denjenigen Mobilteilen (140,140') zuläßt, die eine in dem Speicher (120, 120') der Steuereinrichtung (110, 110') abgespeicherte Kennung (K) aufweisen,
**dadurch gekennzeichnet, daß**
- die Steuereinrichtung (110, 110') derart beschaffen ist, daß sie
- unter Benutzung der Daten- und/oder Signalleitungen der Schnittstelle (20) der Telekommunikationsanlage (5)
- einerseits die in ihrem Speicher (120, 120') abgespeicherten Zugangsberechtigungs-Datensignale (Da, Db) anderen an die Schnittstelle (20) angeschlossenen Mobilfunk-Basisstationen (100, 100') zur Verfügung stellt und
- andererseits auf Zugangsberechtigungs-Datensignale (Da, Db) der anderen Mobilfunk-Basisstationen (100, 100') zugreift und
- die Sprach- und/oder Datenübertragung jeweils zusätzlich auch mit jedem anderen Mobilteil (140, 140') zuläßt, dessen Zugangsberechtigung in mindestens einem Speicher (120, 120') der anderen Mobilfunk-Basisstationen abgespeichert ist.

7. Mobilfunk-Basisstation nach Anspruch 6,
**dadurch gekennzeichnet, daß**
- die Steuereinrichtung (110, 110') derart ausgestaltet ist, daß sie die Zugangsberechtigungs-Datensignale über die Daten- und/oder Signalleitungen der Schnittstelle mit den anderen Mobilfunk-Basisstationen austauscht unter Bildung eines einheitlichen Zugangsberechtigungs-Datensatzes in jeder der Mobilfunk-Basisstationen.

8. Mobilfunk-Basisstation nach Anspruch 7,
**dadurch gekennzeichnet, daß**
- die Steuereinrichtung (110, 110') derart ausgestaltet ist, daß sie die Zugangsberechtigungs-Datensignale in regelmäßigen zeitlichen Abständen austauscht.

9. Mobilfunk-Basisstation nach Anspruch 7,
**dadurch gekennzeichnet, daß**
- die Steuereinrichtung (110, 110') derart ausgestaltet ist, daß sie nach einem ersten erfolgten Datenaustausch weitere Zugangsberechtigungs-Datensignale ausschließlich dann austauscht, wenn eine Veränderung der Zugangsberechtigung aufgetreten ist.

10. Mobilfunk-Basisstation nach Anspruch 6,
**dadurch gekennzeichnet, daß**
- die Steuereinrichtung (110, 110') derart ausgestaltet ist, daß sie die in ihrem Speicher hinterlegten Zugangsberechtigungs-Datensignale ausschließlich auf Anfrage anderer Mobilfunk-Basisstationen an diese weiterleitet.

11. Verfahren zum Betrieb einer Anordnung mit einer Telekommunikationsanlage (5), die
- einerseits an ein Telekommunikationsnetz (10) angeschlossen ist und
- andererseits über eine Schnittstelle (20) mit mindestens zwei ortsfesten, jeweils eine Steuereinrichtung (110, 110') aufweisenden Mobilfunk-Basisstationen (100, 100') in Verbindung steht,
wobei bei dem Verfahren
- jede Mobilfunk-Basisstation (100, 100') derart betrieben wird,
- daß sie unter Benutzung der Daten- und/oder Signalleitungen der Schnittstelle (20) der Telekommunikationsanlage (5) die in ihrem jeweiligen Speicher (120, 120') abgespeicherten Zugangsberechtigungs-Datensignale (Da, Db) den Steuereinrichtungen (110, 110') der übrigen Mobilfunk-Basisstationen (100, 100') zum Auswerten zur Verfügung stellt und auf Zugangsberechtigungs-Datensignale (Da, Db) der übrigen Mobilfunk-Basisstationen (100, 100') zugreift und
- daß sie die Sprach- und/oder Datenübertragung der eigenen Mobilfunk-Basisstation (100, 100') jeweils mit jedem Mobilteil (140, 140') zuläßt, dessen Zugangsberechtigung in dem eigenen Speicher oder in mindestens einem der Speicher der übrigen Mobilfunk-Basisstationen hinterlegt ist.

12. Verfahren nach Anspruch 11,
**dadurch gekennzeichnet, daß**
- die Zugangsberechtigungs-Datensignale der Mobilfunk-Basisstationen über die Daten-und/oder Signalleitungen der Schnittstelle untereinander ausgetauscht werden unter Bildung eines einheitlichen Zugangsberechtigungs-Datensatzes in jeder der Mobilfunk-Basisstationen.

13. Verfahren nach Anspruch 12,
**dadurch gekennzeichnet, daß**
- die Zugangsberechtigungs-Datensignale in regelmäßigen zeitlichen Abständen ausgetauscht werden.

14. Verfahren nach Anspruch 12,
**dadurch gekennzeichnet, daß**
- nach einem ersten erfolgten Datenaustausch weitere Zugangsberechtigungs-Datensignale ausschließlich dann ausgetauscht werden, wenn eine Veränderung der Zugangsberechtigung aufgetreten ist.

15. Verfahren nach Anspruch 11,
**dadurch gekennzeichnet, daß**
- Zugangsberechtigungs-Datensignale ausschließlich auf Anfrage anderer Mobilfunk-Basisstationen an diese weitergeleitet werden.

## Claims

1. Arrangement having a telecommunications exchange (5) which is connected
- on the one hand to a telecommunications network (10), and
- on the other hand via an interface (20) to telecommunications terminals (25, 30),
with
- at least two of the telecommunications terminals (25, 30) being stationary mobile radio base stations (100, 100') which are aimed to carry out speech and/or data transmission with all those mobile radio terminals (140, 140') - referred in the following text as mobile parts - whose access authorization is checked and is identified as being correct,
**characterized in that**
- each of the mobile radio base stations (100, 100') has a control device (110, 110'), which contains a memory (120, 120'), for checking the access authorization,
- which control device (110, 110') uses the data and/or signal lines of the interface (20) of the telecommunications exchange (5) to make the access authorization data signals (Da, Db) which are stored in its respective memory (120, 120') available to the control devices (110, 110') of the other mobile radio base stations (100, 100') for evaluation, and accesses access authorization data signals (Da, Db) for the other mobile radio base stations (100, 100'), and
- which control device (110, 110') allows speech and/or data transmission between its own mobile radio base station (100, 100') and each respective mobile part (140, 140') whose identifier (K) is stored as an access authorization data signal (Da, Db) in its own memory (120, 120') or in at least one of the memories of the other mobile radio base stations.

2. Arrangement according to Claim 1,
**characterized in that**
- the control devices (110, 110') for the mobile radio base stations are designed such that they interchange the access authorization data signals with one another via the data and/or signal lines of the interface (20), forming a standard access authorization data record in each of the mobile radio base stations.

3. Arrangement according to Claim 2,
**characterized in that**
- the control devices (110, 110') for the mobile radio base stations are designed such that they interchange the access authorization data signals at regular time intervals.

4. Arrangement according to Claim 2,
**characterized in that**
- the control devices (110, 110') for the mobile radio base stations are designed such that they interchange further access authorization data signals, after a first data interchange has been carried out, only when a change in the access authorization has occurred.

5. Arrangement according to Claim 1,
**characterized in that**
- the control devices (110, 110') for the mobile radio base stations are designed such that they in each case pass on the access authorization data signals which are stored in their respective memory to other mobile radio base stations only on request from them.

6. Mobile radio base station (110, 110') for connection to an interface (20) of a telecommunications exchange (5), having:
- at least one radio device (135, 135') for speech and/or data transmission, and
- at least one control device which drives the radio device (135, 135'), has a memory (120, 120') and allows speech and/or data transmission with all of those mobile parts (140, 140') which have an identifier (K) which is stored in the memory (120, 120') of the control device (110, 110'),
**characterized in that**
- the control device (110, 110') is designed such that
- using the data and/or signal lines of the interface (20) of the telecommunications exchange (5)
- on the one hand it makes the access authorization data signals (Da, Db) which are stored in its memory (120, 120') available to other mobile radio base stations (100, 100') which are connected to the interface (20), and
- on the other hand, it accesses the access authorization data signals (Da, Db) of the other mobile radio base stations (100, 100'), and
- in each case additionally also allows speech and/or data transmission with every other mobile part (140, 140') whose access authorization is stored in at least one memory (120, 120') in the other mobile radio base stations.

7. Mobile radio base station according to Claim 6,
**characterized in that**
- the control device (110, 110') is designed such that it interchanges access authorization data signals via the data and/or signal lines of the interface with the other mobile radio base stations, forming a standard access authorization data record in each of the mobile radio base stations.

8. Mobile radio base station according to Claim 7,
**characterized in that**
- the control device (110, 110') is designed such that it interchanges the access authorization data signals at regular time intervals.

9. Mobile radio base station according to Claim 7,
**characterized in that**
- the control device (110, 110') is designed such that it interchanges further access authorization data signals, after a first data interchange has been carried out, only when a change in the access authorization has occurred.

10. Mobile radio base station according to Claim 6,
**characterized in that**
- the control device (110, 110') is designed such that they pass on the access authorization data signals which are stored in their respective memory to other mobile radio base stations only on request from them.

11. Method for operation of an arrangement having a telecommunications exchange (5), which
- on the one hand is connected to a telecommunications network (10), and
- on the other hand is connected via an interface (20) to at least two stationary mobile radio base stations (100, 100') which have a respective control device (110, 110')
with, in the case of the method:
- each mobile radio base station (100, 100') being operated
- such that, using the data and/or signal lines of the interface (20) of the telecommunications exchange (5), it makes the access authorization data signals (Da, Db) which are stored in its respective memory (120, 120') available to the control devices (110, 110') of the other mobile radio base stations (100, 100') for evaluation, and accesses access authorization data signals (Da, Db) for the other mobile radio base stations (100, 100'), and
- such that it allows speech and/or data transmission between its own mobile radio base station (100, 100') and each respective mobile part (140, 140') whose access authorization is stored in its own memory or in at least one of the memories of the other mobile radio base stations.

12. Method according to Claim 11,
**characterized in that**
- the access authorization data signals of the mobile radio base stations are interchanged with one another via the data and/or signal lines of the interface forming a standard access authorization data record in each of the mobile radio base stations.

13. Method according to Claim 12,
**characterized in that**
- the access authorization data signals are interchanged at regular time intervals.

14. Method according to Claim 12,
**characterized in that**
- once a first data interchange has been carried out, further access authorization data signals are interchanged only when a change has occurred in the access authorization.

15. Method according to Claim 11,
**characterized in that**
- access authorization data signals are passed on to other mobile radio base stations only when requested by them.

## Revendications

1. Dispositif avec une installation de télécommunication (5) qui
- est raccordée d'une part à un réseau de télécommunication (10) et
- est en liaison d'autre part via une interface (20) avec des terminaux de télécommunication (25, 30),
au moins deux des terminaux de télécommunication (25, 30) étant des stations de base de radiocommunication mobile (100, 100') stationnaires qui sont prêtes pour la transmission de paroles et/ou de données avec tous les terminaux de radiocommunication mobile (140, 140') - appelés ci-dessous parties mobiles - dont l'autorisation d'accès est vérifiée et reconnue comme correcte,
**caractérisé par le fait que** chacune des stations de base de radiocommunication mobile (100, 100') comporte pour la vérification de l'autorisation d'accès un dispositif de commande (110, 110') qui contient une mémoire (120, 120') et qui
- en utilisant les lignes de données et/ou de signalisation de l'interface (20) de l'installation de télécommunication (5), met les signaux de données d'autorisation d'accès (Da, Db) mémorisés dans sa mémoire respective (120, 120') à la disposition des dispositifs de commande (110, 110') des autres stations de base de radiocommunication mobile (100, 100') en vue de leur évaluation et accède à des signaux de données d'autorisation d'accès (Da, Db) des autres stations de base de radiocommunication mobile (100, 100'), et
- autorise la transmission de paroles et/ou de données de sa propre station de base de radiocommunication mobile (100, 100') à chaque fois avec toute partie mobile (140, 140') dont l'identificateur (K) est enregistré comme signal de données d'autorisation d'accès (Da, Db) dans sa propre mémoire (120, 120') ou dans au moins l'une des mémoires des autres stations de radiocommunication mobile.

2. Dispositif selon la revendication 1,
**caractérisé par le fait que** les dispositifs de commande (110, 110') des stations de base de radiocommunication mobile sont conçus de telle sorte qu'ils échangent entre eux les signaux de données d'autorisation d'accès par l'intermédiaire des lignes de données et/ou de signalisation de l'interface (20) en formant un ensemble de données d'autorisation d'accès uniforme dans chacune des stations de base de radiocommunication mobile.

3. Dispositif selon la revendication 2,
**caractérisé par le fait que** les dispositifs de commande (110, 110') des stations de base de radiocommunication mobile sont conçus de telle sorte qu'ils échangent les signaux de données d'autorisation d'accès à intervalles temporels réguliers.

4. Dispositif selon la revendication 2,
**caractérisé par le fait que** les dispositifs de commande (110, 110') des stations de base de radiocommunication mobile sont conçus de telle sorte que, après un premier échange de données, ils n'échangent d'autres signaux de données d'autorisation d'accès que s'il y a eu une modification de l'autorisation d'accès.

5. Dispositif selon la revendication 1,
**caractérisé par le fait que** les dispositifs de commande (110, 110') des stations de base de radiocommunication mobile sont conçus de telle sorte qu'ils retransmettent à d'autres stations de base de radiocommunication mobile les signaux de données d'autorisation d'accès enregistrés dans leur mémoire respective exclusivement en réponse à une demande de ces autres stations de base de radiocommunication mobile.

6. Station de base de radiocommunication mobile (110, 110') pour le raccordement à une interface (20) d'une installation de télécommunication (5) avec :
- au moins un dispositif radio (135, 135') pour la transmission de paroles et/ou de données, et
- au moins un dispositif de commande qui commande le dispositif radio (135, 135'), qui comporte une mémoire (120, 120') et qui autorise la transmission de paroles et/ou de données avec toutes les parties mobiles (140, 140') qui ont un identificateur (K) enregistré dans la mémoire (120, 120') du dispositif de commande (110, 110'),
**caractérisée par le fait que** le dispositif de commande (110, 110') est conçu de telle sorte que
- en utilisant les lignes de données et/ou de signalisation de l'interface (20) de l'installation de télécommunication (5),
- d'une part il met les signaux de données d'autorisation d'accès (Da, Db) enregistrés dans sa mémoire (120, 120') à la disposition d'autres stations de base de radiocommunication mobile (100, 100') raccordées à l'interface (20), et
- d'autre part il accède à des signaux de données d'autorisation d'accès (Da, Db) des autres stations de base de radiocommunication mobile (100, 100'), et
- il autorise aussi la transmission de paroles et/ou de données à chaque fois en plus avec toute autre partie mobile (140, 140') dont l'autorisation d'accès est enregistrée dans au moins une mémoire (120, 120') des autres stations de base de radiocommunication mobile.

7. Station de base de radiocommunication mobile selon la revendication 6,
**caractérisée par le fait que** le dispositif de commande (110, 110') est conçu de telle sorte qu'il échange les signaux de données d'autorisation d'accès par l'intermédiaire des lignes de données et/ou de signalisation de l'interface avec les autres stations de base de radiocommunication mobile en formant un ensemble de données d'autorisation d'accès uniforme dans chacune des stations de base de radiocommunication mobile.

8. Station de base de radiocommunication mobile selon la revendication 7,
**caractérisée par le fait que** le dispositif de commande (110, 110') est conçu de telle sorte qu'il échange les signaux de données d'autorisation d'accès à intervalles temporels réguliers.

9. Station de base de radiocommunication mobile selon la revendication 7,
**caractérisée par le fait que** le dispositif de commande (110, 110') est conçu de telle sorte que, après un premier échange de données, il n'échange d'autres signaux de données d'autorisation d'accès que si une modification de l'autorisation d'accès a eu lieu.

10. Station de base de radiocommunication mobile selon la revendication 6,
**caractérisée par le fait que** le dispositif de commande (110, 110') est conçu de telle sorte qu'il retransmet à d'autres stations de base de radiocommunication mobile les signaux de données d'autorisation d'accès enregistrés dans sa mémoire exclusivement en réponse à une demande de ces autres stations de base de radiocommunication mobile.

11. Procédé pour faire fonctionner un dispositif avec une installation de télécommunication (5) qui
- est raccordée d'une part à un réseau de télécommunication (10), et
- est en liaison d'autre part par l'intermédiaire d'une interface (20) avec au moins deux stations de base de radiocommunication mobile (100, 100') stationnaires et comportant chacune un dispositif de commande (110, 110'),
procédé dans lequel on exploite chaque station de base de radiocommunication mobile (100, 100') de telle sorte que
- en utilisant les lignes de données et/ou de signalisation de l'interface (20) de l'installation de télécommunication (5), elle met les signaux de données d'autorisation d'accès (Da, Db) mémorisés dans sa mémoire respective (120, 120') à la disposition des dispositifs de commande (110, 110') des autres stations de base de radiocommunication mobile (100, 100') en vue de leur évaluation et elle accède à des signaux de données d'autorisation d'accès (Da, Db) des autres stations de base de radiocommunication mobile (100, 100'), et
- elle autorise la transmission de paroles et/ou de données de sa propre station de base de radiocommunication mobile (100, 100') à chaque fois avec toute partie mobile (140, 140') dont l'autorisation d'accès est enregistrée dans sa propre mémoire ou dans au moins l'une des mémoires des autres stations de radiocommunication mobile.

12. Procédé selon la revendication 11,
**caractérisé par le fait qu'**on échange les signaux de données d'autorisation d'accès des stations de base de radiocommunication mobile par l'intermédiaire des lignes de données et/ou de signalisation de l'interface en formant un ensemble de données d'autorisation d'accès uniforme dans chacune des stations de base de radiocommunication mobile.

13. Procédé selon la revendication 12,
**caractérisé par le fait qu'**on échange les signaux de données d'autorisation d'accès à intervalles temporels réguliers.

14. Procédé selon la revendication 12,
**caractérisé par le fait que**, après un premier échange de données, on n'échange d'autres signaux de données d'autorisation d'accès que si une modification de l'autorisation d'accès a eu lieu.

15. Procédé selon la revendication 11,
**caractérisé par le fait qu'**on retransmet des signaux de données d'autorisation d'accès à d'autres stations de base de radiocommunication mobile exclusivement en réponse à une demande de ces autres stations de base de radiocommunication mobile.
